# DEMANDE DE BREVET EUROPEEN

(11) **EP 0 731 311 A1**
(43) Date de publication de la demande: **11.09.1996**
(21) Numéro de dépôt: 96400275.2
(22) Date de dépôt: 09.02.1996
(51) Int. Cl.: F16L 58/08, F22B 37/04, F28F 19/06

(54) **Procédé de réparation par chemisage électrolytique d'un tube tel qu'un tube de générateur de vapeur**

(30) Priorité: 08.03.1995 FR 9502720
(71) Demandeur: FRAMATOME, 92400 Courbevoie (FR)
(72) Inventeur: Michaut, Bernard, F-69003 Lyon (FR)
(74) Mandataire: Bouget, Lucien

(57) **Abrégé**

On réalise un revêtement métallique amagnétique épais (18) constituant un manchon sur la surface du tube (12), dans une zone (14), par électrolyse. Le revêtement présente une épaisseur supérieure à 0,5 mm et de préférence voisine d'1 mm et peut assurer à lui seul la tenue mécanique du tube en service. De préférence, le revêtement épais amagnétique est en un alliage nickel-bore à moins de 5 % en poids de bore.

## Description

L'invention concerne un procédé de réparation par chemisage électrolytique d'un tube tel qu'un tube de générateur de vapeur serti dans une plaque tubulaire.

Les échangeurs de chaleur tels que les générateurs de vapeur et en particulier les générateurs de vapeur des réacteurs nucléaires à eau sous pression comportent généralement un faisceau de tubes de grande longueur et de faible diamètre constituant la surface d'échange permettant l'échauffement et la vaporisation de l'eau d'alimentation du générateur de vapeur.

Dans une centrale électro-nucléaire dont le réacteur est refroidi et modéré par de l'eau sous pression, la chaleur dégagée par la réaction nucléaire est extraite du coeur par le fluide de refroidissement ou fluide primaire et transférée dans le générateur de vapeur à de l'eau secondaire qui, après vaporisation, assure l'entraînement des groupes turbo-alternateurs de la centrale. Cette eau secondaire est renvoyée sous forme liquide dans le générateur de vapeur, après passage dans le condenseur.

La surface d'échange d'un générateur de vapeur d'un réacteur nucléaire à eau sous pression est constituée d'un grand nombre de tubes (par exemple 3400 tubes pour chacun des trois générateurs de vapeur d'une centrale de 900 MW.e) à l'intérieur desquels circule le fluide primaire. Le fluide secondaire vient en contact avec la surface extérieure des tubes.

Les tubes ont un diamètre intérieur d'environ 20 mm et sont fixés à chacune de leurs extrémités dans des alésages traversant une plaque tubulaire de forte épaisseur, cette épaisseur étant de l'ordre de 550 mm.

La liaison entre le tube et la plaque tubulaire est assurée par expansion du tube dans un alésage de traversée correspondant de la plaque et par une soudure réalisée à son extrémité inférieure.

De plus, les tubes sont maintenus transversalement par des plaques-entretoises percées de trous de passage des tubes et réparties suivant la longueur des tubes du générateur de vapeur de manière que deux plaques-entretoises quelconques soient séparées par une distance d'un mètre environ.

Les tubes du faisceau d'un générateur de vapeur constituent non seulement la surface d'échange thermique entre le fluide primaire et le fluide secondaire mais encore une paroi de confinement du fluide primaire jouant un rôle extrêmement important quant à la sûreté de fonctionnement de l'installation nucléaire.

Dans le cas d'une centrale comportant un réacteur à eau sous pression d'une puissance de 900 MW.e, le fluide primaire est à une pression voisine de 155 bars et à une température de 300°C et le fluide secondaire à une pression de 56 bars et à une température de 271°C.

Il résulte de la différence de pression existant entre le fluide primaire et le fluide secondaire qu'une détérioration d'un tube du faisceau du générateur peut se traduire par une fuite de fluide primaire dans le fluide secondaire. Le fluide primaire est chargé de substances en solution ou en suspension qui sont radio-actives et en conséquence, une fuite même de faible importance dans un tube du faisceau du générateur de vapeur entraîne une contamination de l'eau secondaire et des composants de la centrale dans lesquels circule cette eau secondaire. Un tel régime de fonctionnement défectueux n'est pas acceptable dans la mesure où le fluide secondaire circule à l'extérieur des bâtiments de sécurité du réacteur nucléaire dans le groupe turbine et dans tous les appareils et circuits auxiliaires qui sont associés à ce groupe.

Les tubes du faisceau d'un générateur de vapeur sont conçus et dimensionnés pour qu'ils puissent subir sans dommage les diverses charges mécaniques et thermiques auxquelles ils sont soumis en service ; le matériau dont ils sont constitués est défini afin d'éviter dans la mesure du possible la corrosion de ces tubes par les fluides avec lesquels ils viennent en contact.

En outre, les caractéristiques chimiques des fluides primaire et secondaire sont, pendant le fonctionnement de l'installation, contrôlées de manière continue et éventuellement rectifiées, afin de réduire les risques de corrosion.

Il est cependant nécessaire de s'assurer en permanence que le faisceau tubulaire du générateur de vapeur est dans un état satisfaisant et assure parfaitement la séparation des fluides primaire et secondaire. Ce contrôle est réalisé par une surveillance continue, en fonctionnement, du niveau d'activité de l'eau secondaire, ce qui permet de détecter des fuites dont le débit est très faible. Pendant les périodes d'arrêt de l'installation nucléaire, on procède à un examen des tubes du faisceau, habituellement par courants de Foucault, afin de déceler des défauts dont l'évolution pourrait entraîner ultérieurement une fuite. Cet examen par courants de Foucault qui est nécessaire pour assurer un fonctionnement satisfaisant du générateur de vapeur, après le redémarrage de l'installation nucléaire, doit pouvoir être effectué dans de très bonnes conditions pour déceler tout défaut qui pourrait entraîner l'apparition d'une fuite sur le générateur de vapeur.

Malgré les diverses précautions prises aussi bien lors de la conception, de la fabrication que lors du fonctionnement des générateurs de vapeur, il s'est avéré que certains matériaux utilisés pour la fabrication des tubes du faisceau présentaient une assez grande sensibilité à la corrosion sous tension, côté primaire. Il en est ainsi en particulier de certaines nuances d'alliages à base de nickel contenant du chrome et du fer.

D'autres types de dégradation ont aussi été observés côté secondaire tels que l'usure par des objets migrants ou la corrosion intergranulaire (IGA) ou sous tension tant au niveau de la plaque tubulaire que des plaques-entretoises et exceptionnellement en partie courante des tubes.

La corrosion sous tension se développe principalement dans les zones où le tube présente des contraintes résiduelles et, dans ces zones, il peut se former une fissure à travers l'épaisseur du tube qui est susceptible de se traduire finalement par une fuite de fluide primaire dans le fluide secondaire.

Une zone particulièrement sensible à ce type de corrosion se situe au niveau de la face supérieure de la plaque tubulaire. En effet, le tube, après introduction dans la plaque tubulaire et avant réalisation de la soudure de son extrémité inférieure est soumis à une opération d'expansion diamétrale appelée mandrinage ou dudgeonnage et qui a pour objet d'assurer un contact intime entre la surface extérieure du tube et la surface de l'alésage percé dans la plaque tubulaire.

Lorsqu'on réalise le sertissage du tube par mandrinage sur toute l'épaisseur de la plaque tubulaire, subsiste dans la paroi du tube une zone de transition entre la partie du tube mandrinée et en contact avec l'alésage de la plaque tubulaire et la partie supérieure du tube qui n'a pas subi l'expansion diamétrale. Dans cette zone de transition, le tube comporte des contraintes résiduelles qui, dans le cas où le matériau est sensible à la corrosion sous tension, peuvent donner lieu à une fissuration intergranulaire dont le développement peut avoir pour conséquence une fuite de fluide primaire à travers l'épaisseur du tube.

Pour remédier à cet inconvénient, on a proposé des méthodes de détensionnement thermique ou mécanique de la paroi des tubes du faisceau d'un générateur de vapeur, dans la zone de transition.

Il est cependant nécessaire de disposer également de méthodes de réparation qui peuvent être mises en oeuvre sur des générateurs de vapeur dont le faisceau tubulaire a déjà subi des dégradations.

Certains procédés de manchonnage consistent à fixer un manchon sur une partie de la surface intérieure du tube, de manière telle que le manchon (ou manchette) masque la fissure traversant la paroi du tube ou risquant de traverser cette paroi.

Le manchon dont le diamètre est inférieur au diamètre intérieur du tube est placé dans la position voulue à l'intérieur de ce tube et subit une expansion diamétrale par mandrinage qui assure à la fois la tenue mécanique et l'étanchéité de la fixation du manchon. Le mandrinage peut être réalisé sur toute la hauteur du manchon ou uniquement dans deux zones de ce manchon correspondant à ses extrémités supérieure et inférieure.

Le manchon peut être également brasé à l'intérieur du tube ou fixé par un cordon de soudure à chacune de ses extrémités.

Dans certains cas, on fixe une extrémité et de préférence l'extrémité inférieure du manchon par mandrinage dans le tube et l'autre extrémité du manchon par soudure.

Les procédés de manchonnage connus permettent effectivement de réparer des tubes présentant des défauts résultant de fissures développées par corrosion sous tension et d'éviter des fuites de fluide primaire vers le fluide secondaire. Cependant, on a constaté qu'après un certain temps de fonctionnement des tubes ainsi réparés, le faisceau tubulaire présentait à nouveau un certain taux de fuite détecté par le contrôle de la radio-activité de l'eau secondaire. A l'examen, il est apparu que de nouveaux défauts s'étaient développés dans les tubes généralement au niveau de l'extrémité supérieure de fixation de la chemise dans le tube ou au voisinage immédiat de cette extrémité supérieure.

L'extrémité supérieure des manchons de chemisage qui se trouve dans la partie du tube saillante par rapport à la face supérieure de la plaque tubulaire et qui est généralement fixée par sertissage à l'intérieur du tube se trouve précisément placée dans une zone où le tube subit une certaine expansion diamétrale et présente une concentration de contraintes importante.

Le manchon et le tube présentent des variations de diamètre (expansions), de forme, et de nature des contacts (mécanique, soudure ou brasure), qui rendent difficiles les contrôles classiques effectués avec des sondes à courant de Foucault (sondes intégrantes ou sondes tournantes).

Au total, on constate que le manchonnage possède deux graves inconvénients :
1 - Pour assurer la liaison entre le tube et le manchon, on procède à une déformation du tube sensible à la corrosion et les contraintes introduites par cette déformation entraînent un risque futur de corrosion dans la zone nouvellement déformée.
2 - Le contrôle de l'assemblage ainsi formé est très difficile à cause de la géométrie complexe de la réparation.

On connaît un procédé décrit dans le FR-A-2.565.323 qui permet d'assurer la protection contre la corrosion sous tension d'un tube tel qu'un tube de générateur de vapeur serti dans une plaque tubulaire et en particulier de la zone de transition de ce tube située au voisinage de la face de sortie de la plaque tubulaire et correspondant à la zone de séparation entre la partie du tube expansée à l'intérieur de la plaque tubulaire et la partie du tube non expansée. Ce procédé de protection consiste à déposer par électrolyse une couche métallique mince sur la surface intérieure du tube après sa fixation dans la plaque tubulaire. Le revêtement électrolytique permet d'isoler la surface intérieure du tube, en particulier dans la zone où la paroi du tube comporte une forte concentration de contraintes, du fluide d'échange tel que de l'eau sous pression mise en circulation à l'intérieur du tube.

Un tel procédé, utilisant un dépôt de nickel a déjà été largement utilisé. Il possède deux graves inconvénients :
3 - une couche mince de nickel protège le côté primaire seul du tube mais son épaisseur est trop faible pour reprendre les efforts mécaniques si le tube n'assure plus cette fonction à cause de dégradations initiées côté extérieur du tube ;
4 - le nickel est ferromagnétique, ce qui empêche le contrôle du tube par les méthodes classiques par courant de Foucault et oblige à ajouter une nouvelle opération de contrôle par ultrasons à chaque arrêt, ce qui est très pénalisant en ce qui concerne les coûts et délais.

Le but de l'invention est donc de proposer un procédé de réparation par chemisage d'un tube tel qu'un tube de générateur de vapeur serti dans une plaque tubulaire, consistant à déposer par électrolyse, sur une surface du tube, une couche métallique dans une zone s'étendant suivant une partie de la longueur du tube, caractérisé par le fait que la couche métallique déposée est amagnétique et présente une épaisseur supérieure à 0,5 mm.

De préférence :
- la couche métallique déposée présente une épaisseur suffisante pour supporter à elle seule les efforts s'exerçant sur le tube en service ;
- la couche métallique présente une épaisseur comprise entre 0,5 et 1,5 mm ;
- la couche métallique présente une longueur comprise entre 100 et 200 mm dans la direction axiale du tube ;
- la couche métallique déposée est constituée par un alliage de nickel et de bore dont la teneur en bore est inférieure à 5 % en poids ;
- la teneur en bore de l'alliage de nickel est inférieure à 0,5 % en poids ;
- le dépôt électrolytique est effectué avec un courant pulsé ;
- le courant pulsé a une fréquence comprise entre 50 et 1000 Hertz et de préférence voisine de 100 Hertz ;

Le procédé qui va être décrit plus en détail s'attache à résoudre d'une manière simple l'ensemble des inconvénients 1, 2, 3 et 4 mis en évidence ci-dessus.

Les deux points qui sont étroitement associés et qui forment le noyau de l'invention sont les suivants :
a) Pour s'affranchir de l'obstacle que représente le caractère ferromagnétique du nickel vis-à-vis des contrôles par courant de Foucault, on a sélectionné un nouveau matériau de dépôt qui peut être constitué par exemple par du nickel faiblement enrichi en bore, sachant que les dépôts de Ni-B sont pratiquement amagnétiques et permettent donc le contrôle par courants de Foucault ;
b) Pour poser l'équivalent d'un manchon mais sans avoir de déformation du tube préjudiciable aussi bien à la corrosion dans la zone déformée et au contrôle de la géométrie complexe ainsi formée, on utilise uniquement une méthode de dépôt électrolytique d'un manchon (par exemple en Ni-B) avec une épaisseur importante qui lui permet de reprendre les efforts mécaniques et la pression même si la dégradation du tube continue par l'extérieur et même si cela entraînait une coupure totale du tube dans la zone dégradée.

Afin de bien faire comprendre l'invention, on va maintenant décrire, à titre d'exemple non limitatif, un mode de réalisation du procédé suivant l'invention dans le cas d'un tube de générateur de vapeur d'un réacteur nucléaire à eau sous pression.

La figure 1 est une vue en coupe par un plan axial de symétrie d'un tube de générateur de vapeur serti dans une plaque tubulaire.

La figure 2 est une vue en coupe par un plan axial d'un tube de générateur de vapeur comportant un manchon fixé dans le tube par un procédé selon l'art antérieur.

La figure 3 est une vue en coupe par un plan axial d'un tube de générateur de vapeur comportant un chemisage déposé à l'intérieur du tube par le procédé suivant l'invention.

La figure 4 est une vue en coupe axiale d'une partie d'un tube de générateur de vapeur engagée dans une ouverture d'une plaque-entretoise dans laquelle on effectue une réparation par le procédé suivant l'invention.

La figure 5 est une vue en coupe axiale d'une partie courante détériorée d'un tube de générateur de vapeur dans laquelle on a effectué une réparation par le procédé suivant l'invention.

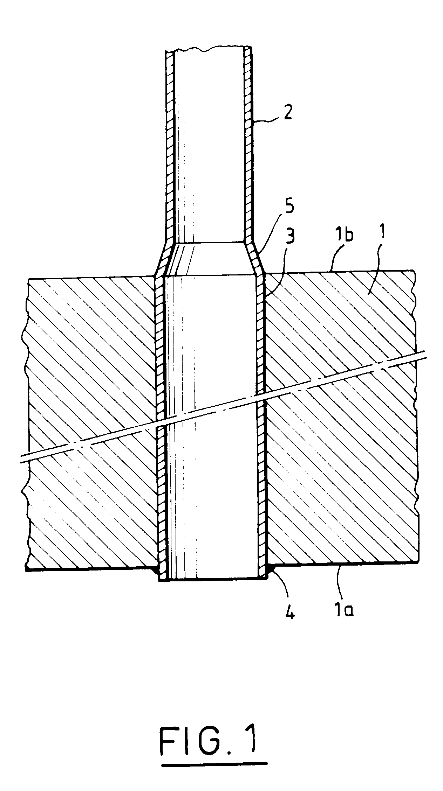

Sur la figure 1, on voit la plaque tubulaire 1 d'un générateur de vapeur présentant une forte épaisseur, de l'ordre de 550 mm, dans laquelle est fixée une extrémité d'un tube 2 du faisceau du générateur de vapeur, à l'intérieur d'un alésage 3 traversant la plaque tubulaire sur toute son épaisseur entre sa face d'entrée 1a et sa face de sortie 1b. Le tube 2 est fixé dans la plaque tubulaire 1, de manière qu'il soit pratiquement affleurant sur la face d'entrée la et saillant par rapport à la face de sortie 1b de la plaque tubulaire. La face d'entrée la de la plaque tubulaire constitue une des parois de la boîte à eau du générateur de vapeur dans laquelle pénètre le fluide primaire qui est amené à circuler à l'intérieur des tubes 2.

Les tubes 2 sont saillants par rapport à la face de sortie 1b de la plaque tubulaire qui délimite la partie supérieure du générateur de vapeur dans laquelle est disposé le faisceau tubulaire.

L'eau d'alimentation du générateur de vapeur pénètre dans cette partie supérieure pour venir en contact avec la surface extérieure des tubes 2.

Les tubes 2 du faisceau sont fixés à leur extrémité dans les trous traversants 3 de la plaque tubulaire 1 par mandrinage du tube à l'intérieur de l'alésage 3 entraînant une expansion diamétrale et un sertissage du tube qui est déformé au contact de la surface de l'alésage 3. La fixation et l'étanchéité du tube 2 sont complétées par un joint de soudure 4 effectué au niveau de la face d'entrée 1a de la plaque tubulaire.

Le tube 2 présente, au voisinage de la face de sortie 1b de la plaque tubulaire, une zone de transition 5 entre la zone inférieure du tube déformée par expansion diamétrale et la zone supérieure du tube non déformée. Dans cette zone 5, la paroi du tube 2 présente une forte concentration de contraintes qui favorise la corrosion sous tension du tube dans le générateur de vapeur en fonctionnement.

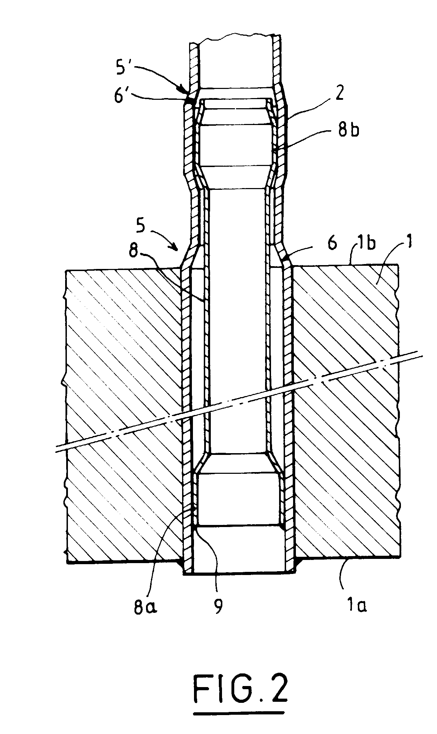

Dans le cas de tubes de générateur de vapeur en un alliage sensible à ce type de corrosion, par exemple en alliage à base de nickel contenant du chrome et du fer, la corrosion sous tension dans la zone de transition 5 peut être forte et se traduire par la formation d'une fissure 6 traversant la paroi du tube 2 dans la zone de transition 5, comme il est visible sur la figure 2.

L'évolution de la fissure 6 peut conduire à une fuite du fluide primaire circulant dans le tube 2 vers la partie du générateur de vapeur renfermant l'eau d'alimentation située au-dessus de la plaque 1b.

Dans ce cas, il est possible d'effectuer une réparation du tube 2 par chemisage comme il est représenté sur la figure 2.

Un manchon de chemisage 8 est introduit dans le tube 2 par son extrémité affleurant la face d'entrée la de la plaque tubulaire, de manière à recouvrir la zone comportant la fissure 6.

Le manchon de chemisage 8 subit une expansion diamétrale dans deux zones d'extrémité 8a et 8b par mandrinage. La fixation étanche du manchon 8 est complétée par une soudure 9 à son extrémité inférieure.

La déformation du tube 2 au niveau de la zone 8b du manchon provoque la formation d'une nouvelle zone de transition 5' entre une partie déformée et une partie non déformée du tube 2 dans laquelle la paroi du tube 2 présente une forte concentration de contraintes.

Dans le générateur de vapeur en fonctionnement, les tubes tels que le tube 2 qui ont été chemisés sont susceptibles de présenter des fissures 6' génératrices de fuite dans les zones de transition telles que la zone 5'.

La présence de fissures traversantes 6' peut se traduire par des fuites de fluide primaire dans le fluide secondaire.

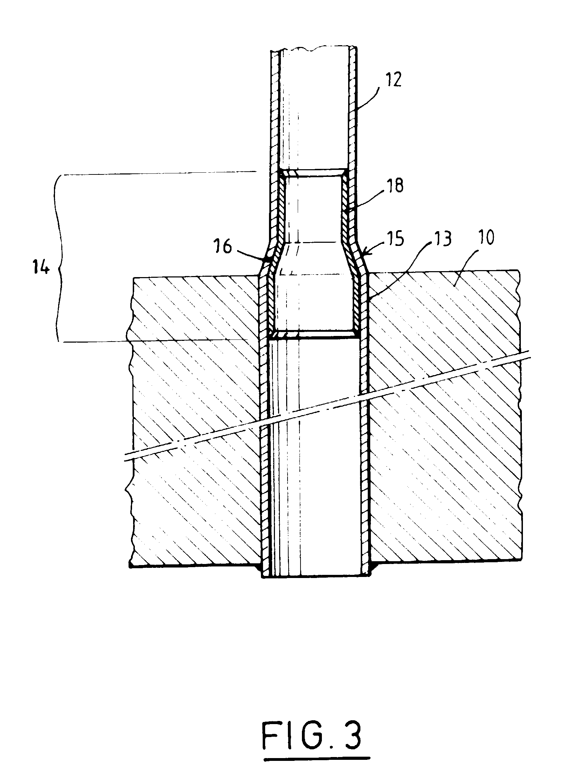

Le procédé de réparation suivant l'invention qui sera décrit en se référant à la figure 3 évite la formation de fissures par corrosion sous tension dans les zones réparées du tube car on ne déforme pas celui-ci.

Sur la figure 3, on a représenté l'extrémité d'un tube 12 d'un générateur de vapeur fixée par sertissage et par soudage dans un alésage traversant 13 d'une plaque tubulaire 10 de forte épaisseur.

Le tube 12 a subi une forte corrosion sous tension dans sa zone de transition 15 et une fissure 16 génératrice de fuite s'est formée dans cette zone 15.

Pendant un arrêt de la centrale sur laquelle est utilisé le générateur de vapeur, on effectue un chemisage du tube 12 en utilisant le procédé suivant l'invention.

Dans un premier temps, on réalise un nettoyage et un décapage de la surface intérieure du tube 12, afin d'enlever toute trace d'oxyde de cette surface, dans une zone 14.

La position et la longueur de la zone 14 sont définies en fonction de la position de la fissure 16 et de la zone de transition 15 du tube 12 et en fonction de la longueur de la zone de chemisage sur le tube sain, de part et d'autre de la zone dégradée, nécessaire pour assurer une bonne liaison mécanique entre la chemise 18 et le tube 12.

Après nettoyage de la zone 14, on réalise dans cette zone un dépôt électrolytique épais 18 de nickel-bore sur la surface intérieure du tube.

Ce revêtement électrolytique d'une épaisseur de l'ordre d'un millimètre peut être réalisé en utilisant un dispositif connu comportant des bouchons ou des joints de fermeture étanche du tube de part et d'autre de la zone 14 et des moyens d'alimentation en liquide électrolytique de la zone délimitée par les bouchons ainsi que des moyens d'amenée du courant d'électrolyse dans la zone 14.

Un tel procédé de revêtement électrolytique de la surface d'un tube désigné par l'abréviation REDN (Revêtement électrolytique de nickel) est décrit dans les brevets FR-A-2.565.323 et EP-A-0.167.513.

Par rapport aux brevets mentionnés ci-dessus, on utilise de manière préférentielle un apport de bore par ajout dans la solution de sulfamate de nickel de 10 à 40 g/litre de Dimethylamine borane (CH₃)₂NHBH₃.

D'autres solutions de base que le sulfamate de nickel sont utilisables comme bain électrolytique telles que le carbonate de nickel soluble, le chlorure de nickel et le sulfate de nickel. Des additions de soude permettent de fixer le pH de la solution entre 4 et 6.

Pour accélérer la vitesse de dépôt, une solution préférentielle consiste à utiliser des courants pulsés à des fréquences de 50 à 1000 Hertz avec un cycle de 10 millisecondes qui peut comporter pour 100 Hertz, 2 millisecondes actives cathodiques sous 80 ampères/dm², un temps facultatif anodique de 0,1 millisecondes à -20 ampères/dm² et un temps de repos de 7,9 millisecondes.

Le dépôt de nickel-bore électrolytique 18 est suffisamment ductile et adhérent pour subir les déformations en service du tube et la différence de pression entre l'intérieur et l'extérieur du tube.

De plus, la couche 18 de nickel-bore électrolytique n'est pas sensible à la corrosion sous tension dans les conditions d'utilisation du générateur de vapeur.

Le revêtement 18 évite donc l'apparition de nouvelles fissures telles que la fissure 6' représentée sur la figure 2, dans le générateur de vapeur en fonctionnement, après chemisage du tube 12 en utilisant le procédé suivant l'invention.

On obtient donc de cette manière une protection efficace du tube dans la zone de transition.

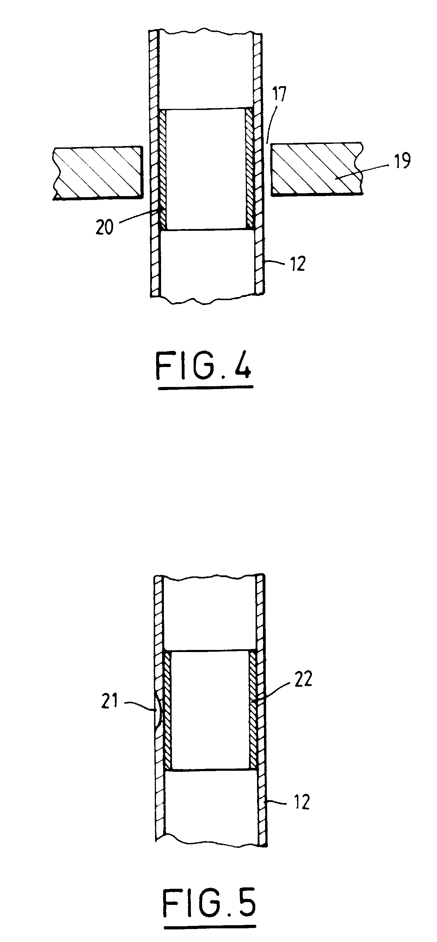

Sur la figure 4, on a représenté un tube 12 du générateur de vapeur dans une zone traversant une ouverture d'une plaque tubulaire 19 du générateur de vapeur avec un jeu 17 permettant de réaliser l'engagement du tube 12 sans risque de détérioration de sa surface externe. Dans le générateur de vapeur en service le jeu 17 constitue une crevasse favorisant la corrosion de la paroi du tube. Il peut donc s'avérer nécessaire d'effectuer une réparation du tube 12 dans sa zone de traversée de la plaque-entretoise 19 ou de réaliser le dépôt préventif d'un manchon protecteur.

Un manchon de réparation ou de protection 20 d'une épaisseur voisine d'un millimètre en nickel-bore peut être réalisé par dépôt électrolytique sur la surface interne du tube 12 dans la zone de traversée de la plaque-entretoise 19.

Sur la figure 5, on voit une partie courante d'un tube 12 du générateur de vapeur, par exemple entre deux plaques-entretoises successives.

Le tube 12 est susceptible de subir une corrosion en service et de présenter une zone dégradée 21 sur sa surface externe.

On réalise, pendant un arrêt du réacteur, le dépôt d'un manchon 22, par électrolyse sur la surface interne du tube 12 dans la zone dégradée. Le manchon 22 est réalisé de préférence en nickel-bore et présente une épaisseur de l'ordre d'un millimètre et une longueur de 100 à 200 mm.

L'invention ne se limite pas au mode de réalisation qui a été décrit.

C'est ainsi qu'au lieu d'un revêtement électrolytique de nickel-bore, en fonction du matériau du tube à chemiser et de ses conditions d'utilisation, on peut envisager le dépôt d'un revêtement amagnétique en un autre métal ou de manière plus générale, un revêtement d'un composé chimique métallique approprié.

L'épaisseur du revêtement peut être différente d'un millimètre, en fonction de la nature du revêtement, de la dimension du tube et des caractéristiques géométriques du manchon de chemisage. Toutefois, le revêtement doit avoir une épaisseur au moins égale à 0,5 mm, de manière à pouvoir assurer une tenue mécanique suffisante à lui seul. De manière générale, le revêtement peut présenter une épaisseur comprise entre 0,5 et 1,5 mm.

La zone dans laquelle on effectue le nettoyage du tube suivi de son revêtement peut s'étendre vers la base du tube, au-delà de la zone de fixation du manchon et de la zone inférieure de transition correspondante.

Le revêtement peut être effectué dans une zone s'étendant à l'intérieur de la plaque tubulaire, de manière à assurer une protection accrue du tube contre la corrosion.

Le revêtement peut également être effectué dans une zone du tube engagée à l'intérieur d'une plaque-entretoise d'un générateur de vapeur ou dans une zone courante suivant la longueur du tube. Dans tous les cas, la zone revêtue présentera de préférence une longueur dans la direction axiale du tube comprise entre 100 et 200 mm.

L'invention s'applique non seulement dans le cas des tubes de générateur de vapeur des réacteurs nucléaires à eau sous pression mais également dans le cas de tubes situés dans d'autres parties de la centrale nucléaire venant en contact avec le fluide primaire. En particulier, l'invention peut être appliquée de manière avantageuse dans le cas des piquages traversant l'enveloppe du pressuriseur d'un réacteur nucléaire à eau sous pression.

De manière plus générale, l'invention peut connaître des applications dans tous les cas où des tubes sont soumis à la corrosion et doivent être contrôlés par des sondes à courants de Foucault.

## Revendications

1. Procédé de réparation par chemisage d'un tube (12) tel qu'un tube de générateur de vapeur serti dans une plaque tubulaire (10), consistant à déposer par électrolyse, sur une surface du tube, une couche métallique (18) dans une zone (14) s'étendant suivant une partie de la longueur du tube (12), caractérisé par le fait que la couche métallique (18) déposée est amagnétique et présente une épaisseur supérieure à 0,5 mm.

2. Procédé suivant la revendication 1, caractérisé par le fait que la couche métallique (18) déposée présente une épaisseur suffisante pour supporter à elle seule les efforts s'exerçant sur le tube (12) en service.

3. Procédé suivant l'une quelconque des revendications 1 et 2, caractérisé par le fait que la couche métallique (18) présente une épaisseur comprise entre 0,5 et 1,5 mm.

4. Procédé suivant l'une quelconque des revendications 1 à 3, caractérisé par le fait que la couche métallique (18) présente une longueur comprise entre 100 et 200 mm dans la direction axiale du tube (12).

5. Procédé suivant l'une quelconque des revendications 1 à 4, caractérisé par le fait que la couche métallique (18) déposée est constituée par un alliage de nickel et de bore dont la teneur en bore est inférieure à 5 % en poids.

6. Procédé suivant la revendication 5, caractérisé par le fait que la teneur en bore de l'alliage de nickel est inférieure à 0,5 % en poids.

7. Procédé suivant l'une quelconque des revendications 1 à 6, caractérisé par le fait que le dépôt électrolytique est effectué avec un courant pulsé.

8. Procédé suivant la revendication 7, caractérisé par le fait que le courant pulsé a une fréquence comprise entre 50 et 1000 Hertz et de préférence voisine de 100 Hertz.

9. Utilisation d'un procédé suivant l'une quelconque des revendications 1 à 8 pour effectuer la réparation d'un tube (12) d'un composant d'un réacteur nucléaire détérioré sur sa surface interne ou sa surface externe.
